Europäisches Patentamt

European Patent Office

Office européen des brevets

(19)

(11) **EP 0 914 299 B1**

(12) **FASCICULE DE BREVET EUROPEEN**

(45) Date de publication et mention
de la délivrance du brevet:
**24.07.2002 Bulletin 2002/30**

(21) Numéro de dépôt: **98914908.3**

(22) Date de dépôt: **12.03.1998**

(51) Int Cl.⁷: **C03C 3/087**

(86) Numéro de dépôt international:
**PCT/FR98/00508**

(87) Numéro de publication internationale:
**WO 98/40320 (17.09.1998 Gazette 1998/37)**

(54) **COMPOSITIONS DE VERRE SILICO-SODO-CALCIQUES ET LEURS APPLICATIONS**

KALKNATRON-SILIKATGLASZUSAMMENSETZUNGEN UND DEREN ANWENDUNGEN

SODA-LIME-SILICA GLASS COMPOSITIONS AND APPLICATIONS

(84) Etats contractants désignés:
**AT BE DE ES FI FR GB IT LU NL PT SE**

(30) Priorité: **13.03.1997 DE 19710289**
**30.04.1997 FR 9705364**
**17.06.1997 FR 9707521**

(43) Date de publication de la demande:
**12.05.1999 Bulletin 1999/19**

(73) Titulaire: **SAINT-GOBAIN GLASS FRANCE**
**92400 Courbevoie (FR)**

(72) Inventeurs:
• **EL KHIATI, Nathalie**
**F-95170 Deuil la Barre (FR)**
• **GY, René**
**F-93140 Bondy (FR)**
• **LE BOURHIS, Eric**
**F-95200 Sarcelles Village (FR)**

(74) Mandataire: **Renous Chan, Véronique et al**
**Saint-Gobain Recherche,**
**39, Quai Lucien Lefranc**
**93300 Aubervilliers (FR)**

(56) Documents cités:
**WO-A-96/01792        WO-A-96/11887**
**WO-A-98/22403        DE-A- 4 325 656**

• **DATABASE WPI Section Ch, Week 9103 Derwent**
**Publications Ltd., London, GB; Class L01, AN**
**91-018129 XP000318374 & JP 02 289 444 A**
**(NIPPON SHEET GLASS CO LTD)**
• **DATABASE WPI Section Ch, Week 9703 Derwent**
**Publications Ltd., London, GB; Class L01, AN**
**97-029353 XP002068807 & JP 08 290 939 A**
**(NIPPON ELECTRIC GLASS CO)**

**Description**

L'invention concerne des compositions de verre silico-sodo-calcique aptes à être transformées en ruban de verre dans lequel peuvent être découpées des plaques qui présentent notamment après traitement une résistance à la chaleur.

De telles plaques peuvent, plus particulièrement, être utilisées pour réaliser des vitrages anti-feu ou servir de substrats pour la fabrication d'écrans plasma, d'écrans électroluminescents, d'écrans à cathode froide (Field-Emission-Display).

Concernant plus particulièrement les vitrages résistants au feu selon les classes de résistance au feu G, ceux-ci sont constitués d'une feuille de verre trempée thermiquement et possèdent des propriétés d'un vitrage de sécurité.

Des vitrages résistants au feu selon des classes de résistance au feu G ainsi que leurs cadres et leurs fixations doivent résister, lors d'un essai de tenue au feu conforme à la norme DIN 4102 ou à la norme ISO/DIS 834-1, pendant un certain temps au passage du feu et de la fumée. Pendant ce temps, les vitrages ne doivent ni se briser sous l'effet des contraintes qui apparaissent suite aux gradients de température entre la surface du vitrage au contact de la chaleur, et le bord enchâssé, ni dépasser leur point de ramollissement, car ils perdraient leur stabilité et libéreraient ainsi l'ouverture. En fonction du temps en minutes pendant lequel ils résistent au feu, ils sont rangés dans les classes de résistance au feu G 30, G 60, G 90 ou G 120.

En général, les vitrages résistants au feu sont maintenus dans des cadres qui protègent, dans une mesure plus ou moins grande, le bord desdits vitrages contre l'effet de la chaleur. Le gradient de température qui apparaît ainsi entre le milieu du vitrage et le bord engendre des contraintes de traction considérables dans la zone marginale et mène à une destruction des vitrages, si l'on ne prend pas de mesures particulières pour compenser ces contraintes de traction. Ces mesures consistent en une trempe thermique des vitrages permettant d'induire de fortes contraintes initiales de compression dans la zone marginale. La trempe thermique permet de conférer au vitrage des propriétés supplémentaires de verre de sécurité lorsque la trempe est réalisée de telle sorte que, en cas de bris, le vitrage se fragmente en menus morceaux.

L'état de contraintes initiales est habituellement déterminé par le biais de la résistance à la flexion/traction obtenue par la trempe, conformément à la norme DIN 52303 ou à la norme EN 12150. Les expériences ont en l'occurrence révélé la nécessité d'assurer une résistance à la flexion/traction d'au moins 120 N/mm$^2$ pour que le vitrage résiste aux contraintes de traction engendrées par les gradients de température au niveau du bord. Vu que des vitrages non trempés présentent une résistance de base à la flexion/traction d'environ 50 N/mm$^2$, cela signifie qu'il est nécessaire d'augmenter cette résistance, par la trempe, d'au moins 70 N/mm$^2$. La valeur de cette augmentation de la résistance à la flexion/traction correspond directement à la valeur des contraintes initiales superficielles de compression.

On peut en outre augmenter le temps de résistance au feu en augmentant la profondeur d'insertion du vitrage dans le cadre. Dans le cas d'une résistance à la flexion/traction du vitrage de 120 N/mm$^2$ et d'une profondeur d'insertion de 10 mm, le vitrage est par exemple conforme à la classe de résistance au feu G 30, alors qu'une profondeur d'insertion de 20 mm permet d'atteindre la classe de résistance au feu G 90.

Des vitrages en verre flotté habituel (verre de silice à base de soude et de chaux) peuvent être trempés de manière appropriée au moyen d'installations de trempe traditionnelles, vu que ces compositions de verre présentent des coefficients de dilatation thermique relativement élevés supérieurs à $85.10^{-7}K^{-1}$. Le verre flotté habituel permet d'atteindre des résistances à la flexion/traction pouvant aller jusqu'à 200 N/mm$^2$. Sous l'effet des contraintes de traction engendrées par les gradients de température, les vitrages ne se brisent par conséquent pas si la profondeur d'insertion est d'environ 10 mm, mais ils perdent leur stabilité à cause de leur température de ramollissement relativement basse d'environ 730°C. Des vitrages trempés en verre flotté sont donc conformes, dans des conditions d'installation normales, tout au plus à la classe de résistance au feu G 30.

Toutefois, on connaît également des vitrages monolithiques de la classe de résistance au feu G 60 et de classes plus élevées. Ces vitrages sont constitués de compositions de verre ayant une température de ramollissement élevée supérieure à 815°C et présentent, de ce fait, un long temps de résistance lors d'un essai de tenue au feu. Dans ce cas, des verres à base de borosilicate et d'aluminosilicate résistants à la chaleur s'avèrent particulièrement appropriés. Toutefois, ces types de verre doivent également être trempés par voie thermique pour pouvoir résister aux fortes contraintes de traction qui apparaissent dans la zone marginale lors d'un essai de tenue au feu.

L'emploi de la trempe thermique pour des vitrages coupe-feu dont les compositions de verre sont à base de borosilicate ou d'aluminosilicate résistants à la chaleur est connu de par les documents DE 23 13 442 B2 et US 3 984 252. Suivant ces documents, seuls conviennent pour la trempe des verres dont le produit de la dilatation thermique $\alpha$ et du module d'élasticité E atteint 1 à 5 kp.cm$^{-2}$.°C$^{-1}$, c'est-à-dire des verres à base de borosilicate ou d'aluminosilicate à dilatation thermique de $\alpha_{20-300}$ = 30 à 65.10$^{-7}$°C$^{-1}$. Toutefois, la trempe nécessaire au niveau du bord de ces vitrages ne peut être réalisée au moyen des installations de trempe à l'air habituelles, mais fait appel à un procédé particulier dans lequel les vitrages sont disposés, au cours du chauffage, entre des carreaux céramiques légèrement plus petits, de telle sorte que le bord du vitrage dépasse des carreaux céramiques et soit donc refroidi plus rapidement, alors que le milieu du vitrage refroidit plus lentement sous l'effet des carreaux céramiques. La trempe nécessaire au niveau du bord peut certes être obtenue de cette manière, mais les vitrages ainsi fabriqués ne présentent aucune des propriétés du verre de sécurité.

Il est connu de par le document EP-A-638 526 d'utiliser, pour la fabrication de vitrages coupe-feu monolithiques, des compositions de verre qui ont un coefficient de dilatation thermique $\alpha$ compris entre 30 et $60.10^{-7}K^{-1}$, un coefficient $\varphi$ compris entre 0,3 et 0,5 N/(mm$^2$.K), un point de ramollissement (= température pour une viscosité de $10^{7,6}$ Poises) supérieur à 830°C et un point de travail (= température pour une viscosité de $10^4$ Poises) compris entre 1190° et 1260°C. Le coefficient $\varphi$ ou tension thermique spécifique est la grandeur spécifique du verre calculée à partir du coefficient de dilatation thermique $\alpha$, du module d'élasticité E et du coefficient de Poisson $\mu$ suivant la formule $\varphi = \alpha.E/(1-\mu)$. Des vitrages présentant ces propriétés physiques peuvent acquérir, dans une installation de trempe à l'air traditionnelle, aussi bien les contraintes initiales de compression nécessaires au niveau du bord que les contraintes de trempe exercées sur toute la surface et nécessaires pour obtenir une fragmentation en menus morceaux, de sorte qu'aucune mesure particulière n'est nécessaire pour la trempe et que le processus de fabrication en est ainsi considérablement simplifié. Des vitrages présentant ces propriétés physiques contiennent toutefois nécessairement du $B_2O_3$, $Al_2O_3$ et $ZrO_2$ en des quantités qui compliquent le processus de fusion et le processus de transformation. Ces vitrages ne peuvent ainsi pas être fabriqués suivant le procédé de flottage qui a prouvé sa rentabilité exceptionnelle, étant donné que leur point de transformation est trop élevé et que la fusion requiert en outre des mesures particulières.

On connaît de par le document FR-2 389 582 des compositions de verre à base de borosilicate prévues, certes, pour une utilisation dans des vitrages coupe-feu qui, en raison de leur point de transformation relativement bas, peuvent fondre suivant le procédé de flottage et également être trempés au moyen d'installations de trempe habituelles. Ces verres contiennent toutefois 11,5 à 14,5% de $B_2O_3$ et présentent en outre des propriétés physiques semblables à celles des verres connus de par le document EP-A-638 526. Même dans le cas de ces verres, les contraintes initiales de compression et la résistance à la flexion/traction pouvant être atteintes par la trempe à l'air sont limitées à des valeurs relativement basses et ces verres présentent de surcroît les difficultés et inconvénients connus lors de la fusion de verres à base de borosilicate.

En ce qui concerne la fabrication des écrans émissifs du type écrans plasma, le substrat est soumis à plusieurs traitements thermiques qui ont pour but de stabiliser les dimensions dudit substrat et de fixer une série de couches de différents composés, tels que des émaux, déposées sur sa surface. La fixation de ces couches d'épaisseurs plus ou moins importantes nécessite que le substrat soit porté à des températures supérieures à 550°C. Si le coefficient de dilatation du verre silico-sodo-calcique utilisé est du même ordre de grandeur que celui des composés déposés sur sa surface, sa tenue en température est insuffisante et il est nécessaire de le poser sur une dalle rectifiée lors des traitements thermiques pour éviter toute déformation.

De nouvelles familles de compositions de verre ont été mises au point et décrites dans le brevet WO-96/11887, afin de pallier à ces inconvénients, notamment afin de pouvoir fabriquer des plaques ou substrats à déformation quasiment nulle lors de traitements thermiques de l'ordre de 550 à 600°C et aptes à présenter, par trempe thermique, des niveaux de contraintes comparables à ceux obtenus avec du verre silico-sodo-calcique standard.

Il apparaît toutefois que ces verres peuvent présenter des casses lors du dépôt de certaines couches, y compris lorsque les méthodes de dépôt de ces couches conduisent à des températures locales du verre ne dépassant pas une centaine de degrés Celsius.

Les inventeurs se sont ainsi donnés pour mission de remédier à ces casses qui bien que peu fréquentes, perturbent les installations de fabrication.

L'invention a pour but de nouvelles compositions de verre permettant de fabriquer des substrats dont la déformation reste quasi-nulle lorsqu'ils sont soumis à des températures de l'ordre de 600°C et qui ne se détériorent pas lors du dépôt de couches à leur surface, c'est-à-dire qui ne se cassent pas immédiatement et qui ne présentent pas de défaut pouvant conduire à une casse ultérieure.

L'invention a également pour but de nouvelles compositions de verre pour la réalisation de vitrages résistant au feu selon les classes de résistance au feu G qui, d'une part puissent être trempés thermiquement au moyen d'installations classiques et qui, d'autre part puissent être fondus sans problèmes économiques et/ou technologiques et qui puissent être transformés en verre plat selon le procédé « float ».

L'invention a encore pour but des compositions de verre qui permettent la fabrication de vitrages dont l'aspect et les propriétés optiques sont comparables à ceux du verre flotté connu.

Ces buts sont atteints selon l'invention par une composition de verre destinée à la fabrication de substrat thermiquement stable, ladite composition de verre possèdant un facteur de tension thermique ou coefficient $\varphi$ compris entre 0,5 et 0,85 N/(mm$^2$.°C) et un point de travail ou de transformation (viscosité = $10^4$ dPa.S) inférieur à 1200°C.

Comme énoncé précédemment, le coefficient $\varphi$ est défini selon la relation:

$$\varphi = \alpha.E/1-\mu$$

avec :

$\alpha$ : coefficient de dilatation
E : module d'élasticité
$\mu$ : coefficient de poisson

Le module d'élasticité et le coefficient de poisson sont déterminés par le test suivant : une éprouvette de verre de dimensions 100 x 10 $mm^2$ et d'épaisseur inférieure à 6 mm est mis en flexion 4 points dont les appuis extérieurs sont séparés de 90 mm et les appuis intérieurs de 30 mm. Une jauge de contrainte est collée au centre de la plaque de verre. On en déduit les déplacements principaux (dans la longueur de la plaque et dans sa largeur). De la force appliquée on calcule la contrainte appliquée. Les relations entre contrainte et déplacements principaux permettent de déterminer le module d'élasticité et le coefficient de poisson.

Selon une variante préférée de l'invention, les compositions de verre selon l'invention ont un point de ramollissement (viscosité = $10^{7,6}$ poises) supérieur à 750°C. De préférence également, le point de travail des compositions de verre selon l'invention est inférieur à 1190°C.

Dans une variante avantageuse de l'invention, le coefficient de dilatation thermique $\alpha_{20\text{-}300}$ des compositions de verre est compris entre 60 et $88.10^{-7}$°$K^{-1}$, et de préférence inférieur à $85.10^{-7}$°$K^{-1}$.

De préférence encore et plus particulièrement dans le cas de la réalisation de vitrages anti-feu, la composition de verre selon l'invention vérifie la relation :

$$\varphi^2. \, c/a < 2 \text{ MPa}^2/°C^2$$

La valeur « c/a » est définie par le test de fragilité décrit ci-après : le verre est d'abord recuit afin d'éliminer les contraintes résiduelles. Le verre est porté à son point de recuit (« Annealing Point ») pendant 1 heure puis descendu à 2°C/min à température ambiante. L'éprouvette de verre à tester est indentée sous une charge de 200 g pendant 30 secondes à température ambiante. La mesure des diagonales de l'empreinte Vickers, ainsi que la taille des fissures radiales (Lawn et Marshall, J. Am. Cer. Soc. 62 - 347-350 (1979) ; Sehgal et al, J. Mat. Sci. Let. 14 - 167-169 (1995)) est réalisée 72 heures après indentation. Le rapport c/a longueur des fissures radiales/demi diagonale est mesuré sur 10 indentations afin d'obtenir une statistique suffisante.

De façon préférée, la composition de verre selon l'invention vérifie :

$$\varphi^2. \, c/a > 0,70 \text{ MPa}^2/°C^2$$

De préférence encore, le produit $\varphi^2$. c/a est supérieur à 1 et de préférence inférieur à 1,8.

Dans une réalisation de l'invention et plus particulièrement dans le cas de la réalisation de substrats pour des écrans plasma, la composition possède un strain point supérieur à 570°C et de préférence supérieur à 600°C. Plus particulièrement également pour des applications de type écran plasma, le coefficient $\varphi$ est compris entre 0,75 et 0,85, et de préférence inférieur à 0,8.

Pour des applications vitrage anti-feu, le coefficient $\varphi$ est avantageusement inférieur à 0,8 et de préférence supérieur à 0,7.

Les inventeurs ont su mettre en évidence que des verres présentant les propriétés conformes à l'invention non seulement peuvent fondre relativement bien, mais en plus conviennent particulièrement à la fabrication de vitrages monolithiques résistant au feu, dans la mesure où, même dans le cas de la trempe à l'air traditionnelle, ils présentent une résistance à la flexion/traction nettement supérieure à celle des verres à base de borosilicate et d'aluminosilicate connus pour la fabrication de vitrages résistant au feu. Grâce à leur coefficient de dilatation thermique et à leur coefficient $\varphi$ plus élevés, il est possible, en effet, d'obtenir, au moyen d'installations de trempe habituelles, des résistances à la flexion/traction nettement plus grandes, c'est-à-dire des contraintes initiales de compression nettement plus fortes, de manière à augmenter sensiblement la résistance à la différence de température pouvant être atteinte entre le bord froid encastré et le milieu du vitrage chaud. En outre, il est apparu que la résistance de ces verres était tout-à-fait suffisante pour satisfaire à la classe de résistance au feu G 30 même dans le cas d'une profondeur d'insertion dans le cadre de 10 mm. Les verres utilisés conformément à l'invention permettent toutefois également d'atteindre les classes supérieures de résistance au feu G 60, G 90 voire même G 120, lorsque le cas échéant, on utilise des vitrages de plus forte épaisseur et un cadre dans lequel ils sont enchâssés plus profondément, c'est-à-dire un cadre qui recouvre le bord du vitrage dans une plus grande mesure, par exemple jusqu'à 25 mm.

Selon une réalisation préférée de l'invention, la composition de verre comprend les constituants ci-après dans les proportions pondérales suivantes :

| | |
|---|---|
| $SiO_2$ | 55 - 75 % |
| $Al_2O_3$ | 0 - 7 % |
| $ZrO_2$ | 0 - 8 % |
| $Na_2O$ | 5 - 10 % |
| $K_2O$ | 0 - 8% |
| CaO | 8 - 12 % |

Selon une autre réalisation de l'invention, la composition de verre comprend les constituants ci-après dans les proportions pondérales suivantes :

| | |
|---|---|
| $SiO_2$ | 55 - 75 % |
| $Al_2O_3$ | 0 - 7% |
| $ZrO_2$ | 0 - 8 % |
| $Na_2O$ | 2 - 8 % |
| $K_2O$ | 2 - 8 % |
| CaO | 4 - 11 % |
| MgO | 0 - 4 % |

Selon une autre variante et plus particulièrement dans le cas de la fabrication de substrats pour écrans émissifs, la composition de verre selon l'invention possède un coefficient $\varphi$ inférieur 0,84 N/(mm$^2$.°C), sa température inférieure de recuisson (strain point) étant supérieure à 507°C et sa résistivité électrique étant telle que log $\rho_{(250°C)}$ soit supérieur à 6,6.

Il est communément admis que le verre n'a plus aucun comportement visqueux au-dessous d'une température caractéristique appelée température inférieure de recuisson (strain point), qui correspond à une viscosité de l'ordre de 10$^{14,5}$ poises. De ce fait, cette température est un point de repère intéressant pour évaluer la tenue en température d'un verre.

Il s'est avéré lors des essais que notamment la combinaison de ces valeurs de températures inférieures de recuisson et du coefficient $\varphi$ autorisent la réalisation de substrat ou plaque thermiquement stable et ne subissant aucune détérioration ou casse durant les phases de traitement pour le dépôt de couches. Les valeurs de résistivité électrique limitent notamment la diffusion dans le verre par exemple d'ions argent contenus dans les couches déposées à la surface du substrat.

Selon une réalisation préférée de l'invention, le coefficient de dilatation de la composition de verre est compris entre 65 et 88.10$^{-7}$°C$^{-1}$. De telles valeurs sont intéressantes notamment pour leur compatibilité avec celles des frittes de verre habituellement utilisées pour réaliser par exemple des barrières pour les écrans plasma.

De préférence encore, le coefficient de dilatation est compris entre 80 et 85.10$^{-7}$°C$^{-1}$.

Une composition de verre plus particulièrement avantageuse selon l'invention, notamment en termes de résistance à des casses thermiques et de coût présente un coefficient $\varphi$ inférieur à 0,8 N/(mm$^2$.°C) et de préférence encore supérieur à 0,7 N/(mm$^2$.°C).

Egalement pour diminuer le coût de la composition de verre, celle-ci présente avantageusement une température inférieure de recuisson (strain point) inférieure à 590°C et de préférence inférieure à 580°C.

Avantageusement encore et notamment pour diminuer la compaction du substrat lors de traitement à des températures relativement élevées, la composition de verre présente une température inférieure de recuisson (strain point) supérieure à 530°C et de préférence supérieure à 550°C. De telles valeurs de températures inférieures de recuisson autorisent une bonne maîtrise et une bonne précision des dépôts pouvant être effectués à des températures de l'ordre de 600°C.

De préférence encore la résistivité électrique de la composition de verre selon l'invention est telle que log $\rho_{(250°C)}$ est supérieure à 8 ; cela permet de mieux prévenir encore la diffusion dans le verre d'ions provenant des couches déposées.

Selon une réalisation préférée de l'invention, la composition de verre comprend les constituants ci-après dans les proportions pondérales suivantes:

| | |
|---|---|
| SiO$_2$ | 55 - 75 % |
| Al$_2$O$_3$ | 0 - 5 % |
| ZrO$_2$ | 3 - 8 % |
| Na$_2$O | 4,5 - 8 % |
| K$_2$O | 3,5 - 7,5% |
| CaO | 7 - 11 % |

Les différentes familles de compositions de verre selon l'invention présentent notamment l'avantage de pouvoir être fondues et transformées en ruban de verre selon le procédé float à des températures voisines de celles adoptées pour la fabrication de verre silico-sodo-calcique classique.

A cet égard SiO$_2$ joue un rôle essentiel. Dans le contexte de l'invention la teneur en SiO$_2$ ne doit pas excéder environ 75% ; au-delà, la fusion du mélange vitrifiable et l'affinage du verre nécessitent des températures élevées qui provoquent une usure accélérée des réfractaires des fours. Au-dessous de 55% en poids de SiO$_2$, la stabilité des verres selon l'invention est insuffisante.

L'alumine joue un rôle de stabilisant. Cet oxyde augmente dans une certaine mesure la résistance chimique du verre et favorise l'augmentation de la température inférieure de recuisson. Le pourcentage de Al$_2$O$_3$ n'excède avantageusement pas 5%, et de préférence encore 3%, notamment pour ne pas augmenter dans des proportions inacceptables la viscosité du verre aux températures élevées.

ZrO$_2$ joue également un rôle de stabilisant. Cet oxyde augmente dans une certaine mesure la résistance chimique du verre et favorise l'augmentation de la température inférieure de recuisson. Le pourcentage de ZrO$_2$ ne doit pas excéder 8% sous peine de rendre trop difficile la fusion. Si cet oxyde est difficile à fondre, il présente l'avantage de ne pas augmenter la viscosité des verres selon l'invention aux température élevées, dans les mêmes proportions que SiO$_2$ et Al$_2$O$_3$. L'oxyde B$_2$O$_3$ peut également être présent avec une teneur d'au plus 3%, et de préférence inférieure à 2%. Cet oxyde permet de fluidifier le verre sans abaisser le strain point.

D'une façon globale, la fusion des verres selon l'invention reste dans des limites de températures acceptables, sous réserve que la somme des teneurs des oxydes SiO$_2$, Al$_2$O$_3$ et ZrO$_2$ demeure égale ou inférieure à 75%. Par limites acceptables, il faut entendre que la température du verre correspondant à log η = 2 ne dépasse pas environ 1550°C et de préférence 1510°C.

Par ailleurs, il est apparu que ces verres conduisent à une faible corrosion des réfractaires, du type AZS (alumine-zircone-silice), habituellement utilisés dans ce type de four. Ces verres garantissent ainsi une optimisation de la durée d'utilisation du four.

D'autre part, les compositions de verre selon l'invention présentent un écart suffisant entre la température de formage du verre et sa température de liquidus ; en effet, dans la technique du verre flotté en particulier, il est important que la température de liquidus du verre demeure égale ou inférieure à la température correspondant à logη = 3,5, ce qui est le cas des verres selon l'invention. Cet écart est avantageusement d'au moins 10°C à 30°C. Ces écarts ou paliers de travail qui pourraient paraître « étroits » pour des verres standards silico-sodo-calciques destinés à fabriquer des vitrages, sont ici suffisants pour assurer un formage de qualité sans adopter des conditions trop extrêmes pour le fonctionnement du four. Il s'agit en effet de verres assez particuliers, pour des applications de type haute technologie à haute valeur ajoutée, comme les écrans plasma où l'on peut « se permettre » un contrôle et une adéquation très précise du fonctionnement du four : on reste dans des paliers de travail « accessibles » sans bouleversement ou prise de risque quant au four.

L'influence des autres oxydes sur l'aptitude des verres selon l'invention à être fondus et flottés sur un bain métallique, ainsi que sur leurs propriétés, est la suivante : les oxydes Na$_2$O et K$_2$O permettent de maintenir la température de fusion des verres selon l'invention et leurs viscosités aux températures élevées dans les limites indiquées précédemment. Pour ce faire, la somme des teneurs de ces oxydes demeure supérieure à 8%, et de préférence supérieure à 10%. Par rapport à un verre silico-sodo-calcique ordinaire, la présence simultanée de ces deux oxydes dans les verres selon l'invention, parfois dans des proportions voisines, permet d'augmenter considérablement leur résistance chimique, plus précisément leur résistance hydrolytique, ainsi que leur résistivité électrique. L'augmentation de la résistivité électrique des verres permet de diminuer la diffusion d'ions, par exemple d'argent, dans le verre provenant des couches déposées à la surface des substrats, notamment dans le cas de la réalisation d'écrans plasma. L'augmentation de la résistivité électrique des verres est également intéressante dans certaines applications, plus précisément lorsqu'ils servent de substrat pour les écrans à cathode froide. Dans ces écrans prennent naissance des champs électriques de surface qui provoquent une concentration localisée d'électrons. Cette concentration peut provoquer en réaction une migration indésirable des alcalins si la résistivité du verre est insuffisante, comme dans le cas d'un verre silico-sodo-calcique ordinaire.

Si les deux types d'oxydes alcalins Na$_2$O et K$_2$O sont nécessaires, en revanche, s'il l'on veut en augmenter la teneur globale, il est préférable de favoriser une augmentation en $K_2O$, qui présente l'avantage de fluidifier le verre sans abaisser le strain point, sans être donc trop pénalisant sur les propriétés de dureté du verre après formage. De plus, $K_2O$ favorise une diminution du module d'élasticité dans les compositions de verre selon l'invention. On prévoit ainsi avantageusement, de préférence, un rapport de pourcentages pondéraux $K_2O/Na_2O$ d'au moins 1,2, et de préférence d'au moins 1,4.

Il est également possible de prévoir d'incorporer de l'oxyde de lithium $Li_2O$ dans la composition de verre selon l'invention, notamment en tant qu'agent fondant, dans des teneurs pouvant atteindre 3% et de préférence ne dépassant pas 1%.

Les oxydes alcalino-terreux introduits dans les verres selon l'invention ont pour effet globalement d'élever la température inférieure de recuisson, c'est la raison pour laquelle la somme de leurs teneurs pondérales doit être au moins égale à 12%. Au-delà de 20% environ l'aptitude des verres à dévitrifier peut s'amplifier dans des proportions incompatibles avec le procédé de flottage sur bain métallique. Afin de maintenir la dévitrification des verres dans des limites acceptables leurs teneurs pondérales en CaO et MgO ne doivent pas excéder respectivement 12 et de préférence 11%, et 5%. La teneur en MgO est, de préférence, égale ou inférieure à 2%.

MgO, CaO et à un degré moindre SrO permettent d'élever la température inférieure de recuisson ; BaO et SrO permettent d'augmenter la résistance chimique des verres selon l'invention ainsi que leur résistivité. Les alcalino-terreux ont également pour effet de diminuer la température de fusion ainsi que la viscosité des verres aux températures élevées.

BaO est toutefois présent de préférence avec une teneur inférieure à 2% ; ces faibles teneurs permettent de limiter la formation de cristaux de sulfate de baryum $BaSO_4$, qui s'avère pénalisante sur le plan de la qualité optique. Si une absence totale de BaO n'est pas exclue, une faible teneur est préférée du fait des propriétés de BaO précédemment énoncées. Lorsque BaO est présent, il est encore possible d'adapter légèrement les conditions de traitements thermiques du substrat pour les rendre défavorables à la formation de cristaux de $BaSO_4$.

Les avantages présentés par les compositions de verre selon l'invention seront mieux appréciés à travers les exemples présentés ci-après.

Les premiers exemples concernent plus particulièrement des compositions destinées à la fabrication de vitrage anti-feu.

On réalise une composition de verre comprenant les constituants ci-après dans les proportions pondérales suivantes, la première colonne indique les valeurs de consigne et la deuxième colonne les valeurs mesurées:

| | Consigne | Mesurées |
|---|---|---|
| $SiO_2$ | 69,60 % | 69,60 % |
| $Al_2O_3$ | 0,90 % | 0,90 % |
| $ZrO_2$ | 2,60 % | 2,62 % |
| $Na_2O$ | 7,10 % | 7,07 % |
| $K_2O$ | 2,90 % | 2,91 % |
| CaO | 10,50 % | 10,50 % |
| MgO | 2,00 % | 1,98 % |
| SrO | 3,90 % | 3,86 % |
| $Fe_2O_3$ | <0,15 % | 0,055 % |
| Autres oxydes | <0,50 % | 0,505 % |

La composition de verre présente les propriétés suivantes :

↪ coefficient $\varphi$ : 0,77 N/(mm$^2$.°C)
↪ coefficient de dilatation $\alpha_{20-300}$ : 76,6.10$^{-7}$°C$^{-1}$
↪ module d'élasticité : 78,6.10$^3$ N/mm$^2$
↪ coefficient de poisson : 0,22
↪ $\varphi^2$.c/a 1,64 MPa$^2$/°C$^2$
↪ Point de ramollissement : 805°C
↪ Température de liquidus $T_{liq}$ : 1160°C
↪ Température correspond à viscosité telle que log$\eta$ = 2 ; $T_{log\eta=2}$ 1500°C
↪ Température correspond à viscosité telle que log$\eta$ = 3,5 ; $T_{log\eta=3,5}$ 1176°C
↪ Température correspond à viscosité telle que log$\eta$ = 4 ; $T_{log\eta=4}$ 1100°C
↪ Densité 2,59
↪ TL 84,48 %

↳ TE     81,46 %

Il apparaît tout d'abord, au vu de la température de liquidus, de $T_{log\eta=2}$, qui est la température dans le bain de fusion et de $T_{log\eta=3,5}$, qui est la température choisie d'entrée du verre sur le bain de métal en fusion, que la composition de verre peut être fondue dans un four de fusion, et que le formage sur bain d'étain (procédé « float ») ne pose pas de problème.

Des feuilles de verre ont ainsi été réalisées avec des épaisseurs comprises entre 5 et 10 mm. Après avoir été soumises à un doucissage au niveau des bords, les feuilles de verre ont été trempées en position horizontale dans une installation de trempe à l'air habituelle.

Les feuilles de verre ont ensuite été enchâssées dans des cadres avec des profondeurs de feuillure variant de 10 mm à 25 mm.

Il s'est avéré que les vitrages ainsi réalisés selon l'invention ont montré lors d'essais de tenue au feu conforme à la norme DIN 4102 ou à la norme ISO/DIS 834-1, qu'ils satisfaisaient aux conditions des classes de résistance au feu G30 à G120 en fonction de leur épaisseur et de la profondeur de la feuillure du cadre.

La composition de verre décrite ci-après qui peut également être fondue et obtenue sous forme d'un ruban selon la technique float, peut également être utilisée pour la réalisation de vitrage anti-feu satisfaisant aux conditions des classes de résistance feu G :

| | |
|---|---|
| $SiO_2$ | 74,40 % |
| $Al_2O_3$ | 0,95 % |
| $Na_2O$ | 9,05 % |
| $K_2O$ | 0,45 % |
| CaO | 9,10 % |
| MgO | 5,65 % |
| $Fe_2O_3$ | 0,10 % |
| Autres oxydes | 0,30 % |

Elle présente les propriétés suivantes :

↳ coefficient $\varphi$ :     0,71 N/(mm$^2$.°C)
↳ coefficient de dilatation $\alpha_{20-300}$ :     $75,6.10^{-7}$°C$^{-1}$
↳ module d'élasticité :     $75,4.10^3$ N/mm$^2$
↳ coefficient de poisson :     0,20
↳ $\varphi^2$.c/a     1,56 MPa$^2$/°C$^2$

Les compositions de verre décrites dans le tableau ci-après peuvent également être fondues et obtenues sous forme d'un ruban de verre selon la technique float et peuvent être utilisées pour la réalisation de vitrages anti-feu satisfaisant aux conditions des classes de résistance au feu G. Les compositions de verre présentées dans ce tableau présentent, par rapport aux précédentes, un point de ramollissement (Littleton) encore supérieur, ce qui améliore encore la tenue au feu.

| | | | |
|---|---|---|---|
| $SiO_2$ | 70 | 66,1 | 65,6 |
| $Al_2O_3$ | 0 | 0,5 | 0,5 |
| $ZrO_2$ | 3 | 6,5 | 6,5 |
| MgO | 2 | 1 | 2 |
| CaO | 6 | 7 | 5 |
| SrO | 8,5 | 7,5 | 9 |
| BaO | 0 | 0 | 0 |
| $Na_2O$ | 5 | 5 | 5 |
| $K_2O$ | 5,4 | 5,9 | 6,4 |
| Point de ramollissement °C | 811 | 825 | 821 |
| Strain Point °C | 577 | 581 | 574 |

(suite)

| | | | |
|---|---|---|---|
| Coefficient de dilatation $\alpha_{20\text{-}300}$ °C$^{-1}$ | 77,8 | 78 | 80 |
| Module d'élasticité $10^3$ N/mm$^2$ | 75 | 76,7 | 76 |
| Coefficient $\varphi$ N/(mm$^2$.°C) | 0,75 | 0,77 | 0,78 |
| Tlog$\eta$ = 3,5 (°C) | 1182 | 1197 | 1191 |
| Tlog$\eta$ = 2 (°C) | 1528 | 1522 | 1515 |

La seconde série d'exemples concernent plus particulièrement des compositions de verre destinées à la fabrication de substrat pour écrans plasma. Ces exemples sont rassemblés dans le tableau joint en annexe.

Dans ce tableau, sont regroupées, pour chacun de ces exemples, les formulations chimiques avec les teneurs exprimées en pourcentages pondéraux, les valeurs de coefficient $\varphi$ exprimées en N/(mm$^2$.°C), les valeurs de température inférieure à la température de recuisson des verres (dite strain point) $T_{i,r}$, les coefficients de dilatation thermique $\alpha_{(25\text{-}300°C)}$ des verres en °C$^{-1}$, le log de leurs résistivités en ohm.cm log $\rho$, leurs températures de liquidus $T_{liq}$, leurs températures à des viscosités en poises correspondant respectivement à log$\eta$ = 2 et log$\eta$ = 3,5, Tlog$\eta$ = 2 et Tlog$\eta$ = 3,5. Toutes les températures sont exprimées en degrés Celsius.

Des essais réalisés et/ou des données de l'annexe, et plus particulièrement des trois dernières lignes, lorsque les mesures ont été faites, qui indiquent des températures correspondant pour la première, à la viscosité Tlog$\eta$ = 2, qui est la température dans le bain de fusion, pour la seconde à la viscosité Tlog$\eta$ = 3,5 qui est la température choisie d'entrée du verre sur le bain de métal en fusion et enfin pour la troisième au liquidus, on vérifie tout d'abord que les verres selon l'invention peuvent être fondus dans un four de fusion et que leur formage sur bain d'étain ne pose pas de problème.

Des verres selon l'invention ont ainsi pu être obtenus selon la technique float sous la forme de ruban d'épaisseur contrôlée, pouvant varier de 0,5 à 10 mm. Des feuilles de verre ont ensuite été découpées au format voulu, et soumises à un traitement thermique ayant notamment pour objet de stabiliser les dimensions desdites feuilles. Sur ces feuilles ont ensuite été déposées des couches telles que celles conduisant à la réalisation d'écrans plasma.

Tout d'abord, les substrats ont montré une stabilité thermique tout à fait satisfaisante. Par ailleurs, au cours des traitements de dépôt de couches, il n'est apparu aucune casse desdits substrats.

Les compositions de verre ainsi présentées selon l'invention satisfont donc aux exigences fixées, c'est-à-dire qu'elles permettent de réaliser des substrats ou plaques stables thermiquement et présentant une résistance aux casses thermiques accrue par rapport aux verres déjà connus.

| Composition | 1 | 2 | 3 | 4 | 5 | 6 | 7 | 8 | 9 | 10 | 11 | 12 |
|---|---|---|---|---|---|---|---|---|---|---|---|---|
| $SiO_2$ | 68 | 65 | 64,5 | 65 | 67,5 | 64,5 | 66 | 65 | 69 | 67,5 | 69,5 | 70 |
| $Al_2O_3$ | 0 | 0 | 1 | 1 | 1 | 1 | 0 | 1 | 0 | 0 | 1 | 0,5 |
| $ZrO_2$ | 4 | 7,5 | 7 | 6 | 3 | 6,5 | 6,5 | 6,5 | 4 | 4,5 | 3 | 3 |
| $Na_2O$ | 5 | 5 | 5 | 5,5 | 5 | 7,5 | 7 | 9 | 6 | 5 | 6,5 | 6,5 |
| $K_2O$ | 7,5 | 7,5 | 7,5 | 7,5 | 7 | 5,5 | 4,5 | 4 | 4 | 6 | 3,5 | 3,5 |
| CaO | 11 | 11 | 11 | 10,5 | 10,5 | 10 | 11 | 9,5 | 11 | 11 | 11 | 11 |
| MgO | 0,5 | 0 | 0 | 0 | 1,5 | 2 | 2 | 2 | 2 | 2 | 2 | 1,5 |
| BaO | 0 | 0 | 0 | 0 | 1,5 | 0 | 0 | 0 | 0 | 0 | 0 | 0 |
| SrO | 4 | 4 | 4 | 3,5 | 4 | 3 | 3 | 3 | 4 | 3,5 | 3,5 | 4 |
| $\varphi$ | 0,75 | 0,79 | 0,79 | 0,79 | 0,75 | 0,79 | 0,8 | 0,8 | 0,74 | 0,76 | 0,75 | 0,73 |
| $T_{i.r.}$ | 580 | 583 | 581 | 582 | 573 | 567 | 570 | 558 | - | - | - | - |
| $log\rho$ (250°C) | - | - | - | - | - | 7,9 | - | - | - | - | - | - |
| $\alpha$ | 82 | 81 | 81 | 81 | 81 | 79,8 | 80,1 | 83,2 | 78,1 | 77,4 | 73,1 | 75,5 |
| $Tlog\eta = 2$ | 1496 | 1491 | 1497 | 1491 | 1498 | 1500 | 1490 | 1480 | 1490 | 1485 | 1500 | 1498 |
| $Tlog\eta = 3,5$ | 1171 | 1186 | 1189 | 1186 | 1171 | 1185 | 1175 | 1170 | 1170 | 1173 | 1180 | 1169 |
| $T_{liq}$ | - | - | - | - | - | 1120 | 1140 | 1090 | - | - | - | - |

''-'' : valeur non mesurée

**Revendications**

1. Composition de verre de type silico-sodo-calcique destinée à la fabrication de substrats ou plaques, **caractérisée en ce que** *la* composition de verre possède un coefficient φ, ou tension thermique spécifique calculée à partir du coefficient de dilatation thermique α, du module d'élasticité E et du coefficient de poisson μ selon la formule : φ = $\alpha.E/(1-\mu)$ compris entre 0,50 et 0,85 N/(mm$^2$°C) et un point de travail inférieur à 1200°C.

2. Composition de verre selon l'une des revendications 1, **caractérisée en ce qu**'elle possède un point de ramollissement supérieur à 750°C.

3. Composition de verre selon l'une des revendications 1 ou 2, **caractérisée en ce que** le point de travail est inférieur à 1190°C.

4. Composition de verre selon l'une des revendications 1 à 3, **caractérisée en ce que** le coefficient de dilatation thermique $\alpha_{20-300}$ est compris entre 60 et 88.10$^{-7}$°C.

5. Composition de verre de type silico-sodo-calcique destinée à la fabrication de substrats ou plaques selon l'une des revendications précédentes, **caractérisée en ce qu**'*elle* vérifie la relation :

$$\varphi^2.c/a < 2 \text{ MPa}^2/°C^2$$

6. Composition de verre selon l'une des revendications précédentes, **caractérisée en ce qu**'*elle* vérifie la relation :

$$0,70 \text{ MPa}^2/°C^2 < \varphi^2. c/a$$

7. Composition de verre selon l'une des revendications 1 à 6, **caractérisée en ce qu**'elle possède un strain point supérieur à 570°C et de préférence supérieur à 600°C.

8. Composition de verre selon l'une des revendications précédentes, **caractérisée en ce qu**'elle comprend les constituants ci-après dans les proportions pondérales suivantes :

| | |
|---|---|
| SiO$_2$ | 55 - 75 % |
| Al$_2$O$_3$ | 0 - 7 % |
| ZrO$_2$ | 0 - 8 % |
| Na$_2$O | 5 - 10 % |
| K$_2$O | 0 - 8 % |
| CaO | 8 - 12 % |

9. Composition de verre selon la revendication 8, **caractérisée en ce qu**'elle comprend les constituants ci-après dans les proportions pondérales suivantes:

| | |
|---|---|
| SiO$_2$ | 69,60% |
| Al$_2$O$_3$ | 0,90 % |
| ZrO$_2$ | 2,60 % |
| Na$_2$O | 7,10 % |
| K$_2$O | 2,90 % |
| CaO | 10,50 % |
| MgO | 2,00 % |
| SrO | 3,90 % |
| Fe$_2$O$_3$ | <0,15 % |
| Autres oxydes | <0,50 % |

10. Composition selon la revendication 8, **caractérisée en ce qu**'elle comprend les constituants ci-après dans les proportions pondérales suivantes :

| | |
|---|---|
| $SiO_2$ | 74,40 % |
| $Al_2O_3$ | 0,95 % |
| $Na_2O$ | 9,05 % |
| $K_2O$ | 0,45 % |
| CaO | 9,10 % |
| MgO | 5,65 % |
| $Fe_2O_3$ | 0,10 % |
| Autres oxydes | 0,30 % |

**11.** Composition de verre selon l'une des revendications 1 à 7, *caractérisée en ce qu'elle* comprend les constituants ci-après dans les proportions pondérales suivantes :

| | |
|---|---|
| $SiO_2$ | 55 - 75 % |
| $Al_2O_3$ | 0 - 7 % |
| $ZrO_2$ | 0 - 8 % |
| $Na_2O$ | 2 - 8 % |
| $K_2O$ | 2 - 8 % |
| CaO | 4 - 11 % |
| MgO | 0 - 4 % |

**12.** Composition de verre destinée à la fabrication de substrat ou de plaque thermiquement stable selon la revendication 1 à 4, *caractérisée en ce qu*'elle possède un coefficient $\varphi$ inférieur à 0,84, *en ce que* son strain point est supérieur à 507°C, *et en ce que* sa résistivité électrique est telle que log $\rho_{(250°C)}$ soit supérieure à 6,6.

**13.** Composition de verre selon la revendication 12, *caractérisée en ce que* le coefficient $\varphi$ est inférieur à 0,84, et de préférence supérieur à 0,75.

**14.** Composition de verre selon la revendication 12 ou 13, *caractérisée en ce que* son strain point est compris entre 530 et 590°C, et de préférence entre 550 et 580°C.

**15.** Composition de verre selon l'une des revendications 12 à 14, *caractérisée en ce que* sa résistivité électrique est telle que log $\rho_{(250°C)}$ soit supérieure à 8.

**16.** Composition selon l'une des revendications 12 à 15, *caractérisée en ce qu'*elle comprend les constituants ci-après dans les proportions pondérales suivantes:

| | |
|---|---|
| $SiO_2$ | 55 - 75 % |
| $Al_2O_3$ | 0 - 5 % |
| $ZrO_2$ | 3 - 8 % |
| $Na_2O$ | 4,5 - 8 % |
| $K_2O$ | 3,5 - 7,5 % |
| CaO | 7 - 11 % |

**17.** Utilisation des compositions de verre telles que définies par l'une quelconque des revendications précédentes pour la fabrication de vitrages monolithiques résistant au feu selon les classes de résistance au feu G.

**18.** Utilisation des compositions de verre telles que définies par l'une quelconque des revendications 1 à 16 pour la fabrication de substrats pour écrans émissifs de type écran plasma, écran électroluminescent ou écran à cathode froide, notamment à partir d'une feuille de verre découpée dans un ruban de verre obtenu par flottage du verre sur un bain de métal fondu.

**Patentansprüche**

1. Glaszusammensetzung vom Typ Kalk-Natron-Silicatglas, die für die Herstellung von Substraten oder Platten vorgesehen ist, **dadurch gekennzeichnet, dass** die Glaszusammensetzung einen Wärmespannungsfaktor $\varphi$ bzw. eine spezifische Wärmespannung, berechnet aus Wärmeausdehnungskoeffizient $\alpha$, Elastizitätsmodul E und Poisson-Zahl $\mu$ gemäß der Formel $\varphi = \alpha \cdot E/(1 - \mu)$, von 0,50 bis 0,85 $N/(mm^2 {}^\circ C)$ und einen Verarbeitungspunkt von unter 1 200 °C besitzt.

2. Glaszusammensetzung nach Anspruch 1, **dadurch gekennzeichnet, dass** sie einen Erweichungspunkt von über 750 °C besitzt.

3. Glaszusammensetzung nach Anspruch 1 oder 2, **dadurch gekennzeichnet, dass** der Verarbeitungspunkt unter 1 190 °C liegt.

4. Glaszusammensetzung nach einem der Ansprüche 1 bis 3, **dadurch gekennzeichnet, dass** der Wärmeausdehnungskoeffizient $\alpha_{20/300}$ 60 bis $88 \cdot 10^{-7}$ °C beträgt.

5. Glaszusammensetzung vom Typ Kalk-Natron-Silicatglas, die für die Herstellung von Substraten oder Platten gemäß einem der vorhergehenden Ansprüche vorgesehen ist, **dadurch gekennzeichnet, dass** sie die Beziehung

$$\varphi^2 \cdot c/a < 2\ MPa^2/{}^\circ C^2$$

erfüllt.

6. Glaszusammensetzung nach einem der vorhergehenden Ansprüche, **dadurch gekennzeichnet, dass** sie die Beziehung

$$0{,}70\ MPa^2/{}^\circ C^2 < \varphi^2 \cdot c/a$$

erfüllt.

7. Glaszusammensetzung nach einem der Ansprüche 1 bis 6, **dadurch gekennzeichnet, dass** sie einen unteren Kühlpunkt von über 570 °C und vorzugsweise über 600 °C besitzt.

8. Glaszusammensetzung nach einem der vorhergehenden Ansprüche, **dadurch gekennzeichnet, dass** sie folgende Bestandteile in nachstehenden Gewichtsanteilen umfasst:

| | |
|---|---|
| $SiO_2$ | 55 bis 75 %, |
| $Al_2O_3$ | 0 bis 7 %, |
| $ZrO_2$ | 0 bis 8 %, |
| $Na_2O$ | 5 bis 10 %, |
| $K_2O$ | 0 bis 8 %, |
| CaO | 8 bis 12 %. |

9. Glaszusammensetzung nach Anspruch 8, **dadurch gekennzeichnet, dass** sie folgende Bestandteile in nachstehenden Gewichtsanteilen umfasst:

| | |
|---|---|
| $SiO_2$ | 69,60 %, |
| $Al_2O_3$ | 0,90 %, |
| $ZrO_2$ | 2,60 %, |
| $Na_2O$ | 7,10 %, |
| $K_2O$ | 2,90 %, |
| CaO | 10,50 %, |
| MgO | 2,00 %, |

(fortgesetzt)

| | |
|---|---|
| SrO | 3,90 %, |
| Fe$_2$O$_3$ | < 0,15 %, |
| andere Oxide | < 0,50 %. |

**10.** Glaszusammensetzung nach Anspruch 8, **dadurch gekennzeichnet, dass** sie folgende Bestandteile in nachstehenden Gewichtsanteilen umfasst:

| | |
|---|---|
| SiO$_2$ | 74,40 %, |
| Al$_2$O$_3$ | 0,95 %, |
| Na$_2$O | 9,05 %, |
| K$_2$O | 0,45 %, |
| CaO | 9,10 %, |
| MgO | 5,65 %, |
| Fe$_2$O$_3$ | 0,10 %, |
| andere Oxide | 0,30 %. |

**11.** Glaszusammensetzung nach einem der Ansprüche 1 bis 7, **dadurch gekennzeichnet, dass** sie folgende Bestandteile in nachstehenden Gewichtsanteilen umfasst :

| | |
|---|---|
| SiO$_2$ | 55 bis 75 %, |
| Al$_2$O$_3$ | 0 bis 7 %, |
| ZrO$_2$ | 0 bis 8 %, |
| Na$_2$O | 2 bis 8 %, |
| K$_2$O | 2 bis 8 %, |
| CaO | 4 bis 11 %, |
| MgO | 0 bis 4 %. |

**12.** Glaszusammensetzung, die für die Herstellung eines hitzebeständigen Substrats oder einer hitzebeständigen Platte nach den Ansprüchen 1 bis 4 vorgesehen ist, **dadurch gekennzeichnet, dass** sie einen Wärmespannungsfaktor φ von unter 0,84, **dass** sie einen unteren Kühlpunkt von über 507 °C **und dass** sie einen spezifischen elektrischen Widerstand, der derart ist, dass $\log\rho_{(250°C)}$ größer als 6,6 ist, besitzt.

**13.** Glaszusammensetzung nach Anspruch 12, **dadurch gekennzeichnet, dass** der Wärmespannungsfaktor φ unter 0,84 und vorzugsweise über 0,75 liegt.

**14.** Glas Zusammensetzung nach Anspruch 12 oder 13, **dadurch gekennzeichnet, dass** ihr unterer Kühlpunkt 530 bis 590 °C und vorzugsweise zwischen 550 und 580 °C beträgt.

**15.** Glaszusammensetzung nach einem der Ansprüche 12 bis 14, **dadurch gekennzeichnet, dass** ihr spezifischer elektrischer Widerstand derart ist, dass $\log\rho_{(250°C)}$ größer als 8 ist.

**16.** Glaszusammensetzung nach einem der Ansprüche 12 bis 15, **dadurch gekennzeichnet, dass** sie folgende Bestandteile in nachstehenden Gewichtsanteilen umfasst:

| | |
|---|---|
| SiO$_2$ | 55 bis 75 %, |
| Al$_2$O$_3$ | 0 bis 5 %, |
| ZrO$_2$ | 3 bis 8 %, |
| Na$_2$O | 4,5 bis 8 %, |
| K$_2$O | 3,5 bis 7,5 %, |
| CaO | 7 bis 11 %. |

**17.** Verwendung von Glaszusammensetzungen wie in einem der vorhergehenden Ansprüche definiert zur Herstellung monolithischer Glasscheiben, die gemäß den Feuerwiderstandsklassen G feuerwiderstandsfähig sind.

18. Verwendung von Glaszusammensetzungen wie in einem der Ansprüche 1 bis 16 definiert zur Herstellung von Substraten für Leuchtbildschirme wie Plasma-, Elektrolumineszenz- oder Kaltkathodenbildschirme, insbesondere aus einer Glasscheibe, die aus einem durch das Floatglasverfahren auf einem Bad aus geschmolzenem Metall erhaltenen Glasband zugeschnitten wurde.

**Claims**

1. Soda-lime-silica-type glass composition for the manufacture of substrates or plates, **characterized in that** the glass composition has a coefficient $\psi$ or specific thermal stress calculated on the basis of the thermal expansion coefficient $\alpha$, the modulus of elasticity E and Poisson's ratio $\mu$ in accordance with the formula: $\psi = \alpha.E/(1-\mu)$ between 0.50 and 0.85 N/(mm$^2$°C) and a working point below 1200°C.

2. Glass composition according to claim 1, **characterized in that** it has a softening point above 750°C.

3. Glass composition according to one of the claims 1 or 2, **characterized in that** the working point is below 1190°C.

4. Glass composition according to one of the claims 1 to 3, **characterized in that** the thermal expansion coefficient $\alpha_{20-300}$ is between 60 and 88.10$^{-7}$°C.

5. Soda-lime-silica-type glass composition for the production of substrates or plates according to one of the preceding claims, **characterized in that** it proves the relation:

$$\psi^2.c/a < 2 \text{ MPa}^2/°C^2$$

6. Glass composition according to one of the preceding claims, **characterized in that** it proves the relation:

$$0.70 \text{ MPa}^2/°C^2 < \psi^2.c/a$$

7. Glass composition according to one of the claims 1 to 6, **characterized in that** it has a strain point above 570°C and preferably above 600°C.

8. Glass composition according to one of the preceding claims, **characterized in that** it comprises the following constituents in the following weight proportions:

| | |
|---|---|
| SiO$_2$ | 55-75% |
| Al$_2$O$_3$ | 0- 7% |
| ZrO$_2$ | 0- 8% |
| Na$_2$O | 5-10% |
| K20 | 0- 8% |
| CaO | 8-12% |

9. Glass composition according to claim 8, **characterized in that** it comprises the following constituents in the following weight proportions:

| | |
|---|---|
| SiO$_2$ | 69.60% |
| Al$_2$O$_3$ | 0.90% |
| ZrO$_2$ | 2.60% |
| Na$_2$O | 7.10% |
| K$_2$O | 2.90% |
| CaO | 10.50% |
| MgO | 2.00% |
| SrO | 3.90% |

(continued)

| | |
|---|---|
| Fe$_2$O$_3$ | < 0.15% |
| other oxides | < / 0.50% |

**10.** Composition according to claim 9, **characterized in that** it comprises the following constituents in the following weight proportions:

| | |
|---|---|
| SiO$_2$ | 74.40% |
| Al$_2$O$_3$ | 0.95% |
| Na$_2$O | 9.05% |
| K$_2$O | 0.45% |
| CaO | 9.10% |
| MgO | 5.65% |
| Fe$_2$O$_3$ | 0.10% |
| other oxides | 0.30% |

**11.** Glass composition according to one of the claims 1 to 7, **characterized in that** it comprises the following constituents in the following weight proportions:

| | |
|---|---|
| SiO$_2$ | 55-75% |
| Al$_2$O$_3$ | 0- 7% |
| ZrO$_2$ | 0- 8% |
| Na$_2$O | 2- 8% |
| K$_2$O | 2- 8% |
| CaO | 4-11% |
| MgO | 0- 4% |

**12.** Glass composition used for the manufacture of a thermally stable substrate or plate according to claim 1 to 4, **characterized in that** it has a coefficient $\psi$ below 0.84, its strain point is above 507°C and its electrical resistivity is such that log $\rho$(250°C) is above 6.6.

**13.** Glass composition according to claim 12, **characterized in that** the coefficient $\psi$ is below 0.84 and preferably above 0.75.

**14.** Glass composition according to claim 12 or 13, **characterized in that** its strain point is between 530 and 590°C and preferably between 550 and 580°C.

**15.** Glass composition according to one of the claims 12 to 14, **characterized in that** its electrical resistivity is such that log $\rho_{(250°C)}$ exceeds 8.

**16.** Composition according to one of the claims 12 to 15, **characterized in that** it comprises the following constituents in the following weight proportions:

| | |
|---|---|
| SiO$_2$ | 55-75% |
| Al$_2$O$_3$ | 0 - 5% |
| ZrO$_2$ | 3- 8% |
| Na$_2$O | 4.5- 8% |
| K$_2$O | 3.5-7.5% |
| CaO | 7-11% |

**17.** Use of glass compositions as defined by any one of the preceding claims for the production of monolithic, flame-resistant glazings in accordance with the flame resistance classes G.

**18.** Use of glass compositions as defined by any one of the claims 1 to 16 for the production of substrates for emissive screens such as cold cathode, plasma or electroluminescent screens or displays, particularly from a glass sheet cut in a glass ribbon obtained by floating glass on a molten metal bath.